(19) Europäisches Patentamt / European Patent Office / Office européen des brevets

(11) **EP 3 526 542 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **17791562.6**

(22) Anmeldetag: **17.10.2017**

(51) Int Cl.:
**G01B 11/06** *(2006.01)*    **G01B 21/04** *(2006.01)*
**G01N 21/3581** *(2014.01)*    **G01N 21/89** *(2006.01)*
**G01S 13/88** *(2006.01)*

(86) Internationale Anmeldenummer:
**PCT/DE2017/100891**

(87) Internationale Veröffentlichungsnummer:
**WO 2018/072789 (26.04.2018 Gazette 2018/17)**

(54) **TERAHERTZ-MESSGERÄT ZUR ERMITTLUNG EINER SCHICHTDICKE EINES PRÜFOBJEKTES UND ENTSPRECHENDES MESSVERFAHREN**

TERAHERTZ MEASUREMENT DEVICE FOR DETERMINING A LAYER THICKNESS OF A TEST OBJECT AND CORRESPONDING MEASURING METHOD

APPAREIL DE MESURE TÉRAHERTZ POUR DÉTERMINER L'ÉPAISSEUR D'UNE COUCHE D'UN OBJET À TESTER ET MÉTHODE DE MESURE CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2016 DE 102016119728**

(43) Veröffentlichungstag der Anmeldung:
**21.08.2019 Patentblatt 2019/34**

(73) Patentinhaber: **iNOEX GmbH Innovationen und Ausrüstungen
für die Extrusionstechnik
49324 Melle (DE)**

(72) Erfinder:
• **KLOSE, Ralph
49324 Melle (DE)**
• **BÖHM, Roland
48341 Altenberge (DE)**

(74) Vertreter: **Bremer, Ulrich
Advopat
Patent- und Rechtsanwälte
Theaterstraße 6
30159 Hannover (DE)**

(56) Entgegenhaltungen:
**US-A1- 2016 265 901**    **US-B1- 6 873 931**

• **"Single Point Gauge", youtube, 15. Januar 2015 (2015-01-15), Seite 2 pp., XP054977976, Gefunden im Internet:
URL:https://www.youtube.com/watch?v=zhuZ465Wkj4 [gefunden am 2017-12-21]**
• **DULING IRL N ED - SZCZEPANSKI PAWEL ET AL: "Handheld THz security imaging", PROCEEDINGS OPTICAL DIAGNOSTICS OF LIVING CELLS II, SPIE, US, Bd. 9854, 26. Mai 2016 (2016-05-26), Seiten 98540N-98540N, XP060068501, ISSN: 0277-786X, DOI: 10.1117/12.2224095 ISBN: 978-1-5106-1324-9**
• **PICKWELL-MACPHERSON E ED - JANSEN E DUCO ET AL: "Terahertz pulsed imaging in vivo", OPTICAL INTERACTIONS WITH TISSUE AND CELLS XXII, SPIE, 1000 20TH ST. BELLINGHAM WA 98225-6705 USA, Bd. 7897, Nr. 1, 10. Februar 2011 (2011-02-10), Seiten 1-6, XP060007275, DOI: 10.1117/12.871927 [gefunden am 2011-02-17]**

**Beschreibung**

Die Erfindung betrifft ein Terahertz-Messgerät zur Vermessung von Prüfobjekten sowie ein entsprechendes Verfahren.

Terahertz-Messgeräte senden Terahertz-Strahlung im Frequenzbereich von 10 GHz bis 10 THz auf Prüfobjekte aus. Die THz-Strahlung wird an Grenzflächen von Materialien mit unterschiedlichem Brechungsindex teilweise reflektiert, so dass aus der Laufzeit der ausgesandten und reflektierten, empfangenen THz-Strahlung Abstandsmessungen zwischen Grenzflächen und somit auch Schichtdickenmessungen möglich sind.

Hierbei werden THz-Messgeräte z. B. unmittelbar nach der Produktion von Kunststoff-Extrusionsprodukten wie Rohren, Folien usw. eingesetzt, um diese Prüfobjekte auf konstante Schichtdicken zu überprüfen. Hierbei ermöglichen sie eine kontaktlose Vermessung der Schichtdicken, im Unterschied z. B. zu Ultraschall-Geräten, die Koppelmittel für einen Körperkontakt mit zu vermessenden Prüfobjekten erfordern.

Für eine THz-Laufzeitmessung ist das THz-Messgerät mit seiner optischen Achse senkrecht zu der Oberfläche des Messobjektes zu positionieren, damit die reflektierte Strahlung genau entlang der optischen Achse zurückreflektiert wird. Daher werden THz-Messgeräte im Allgemeinen in äußeren Gestellen mit genauer Beabstandung und Winkelausrichtung zu dem Prüfobjekte beabstandet angebracht und z. B. auf einer kreisbogenförmigen Schienen um das Prüfobjekt herum geschwenkt, um vollumfängliche, kontaktlose Vermessungen des Prüfobjektes zu ermöglichen.

Weiterhin sind optische THz-Mess-Systeme zum Beispiel zum Messen von Lackschichten bekannt, bei denen ein vom Benutzer handhabbarer Messkopf mit einem stationären optischen THz-Detektorsystem über eine Lichtwellenleiter-Verbindung verbunden ist, so dass der Benutzer den Messkopf geeignet positionieren kann.

Das über das Internetportal YouTube abrufbare Video "Single Point Gauge" wird ein THz-Messgerät beschrieben, das von einem Benutzer manuell ergriffen und auf zu prüfenden Objekten positioniert werden kann, um eine Schichtdicke zu messen. Hierbei können verschiedene Aufsätze auf das Prüfgerät gesetzt werden, die zur Positionierung auf den Messobjekten dienen.

Aus "Terahertz pulsed Imaging in vivo" von E. Pickwell-Macpherson, 2011, Proc. of SPIE, Vol. 7897 wird ein System zur in vivo Haut-Darstellung beschrieben, bei dem ein Benutzer einen Messkopf auf die Haut aufsetzt, um die obere Hautschicht zu untersuchen.

Die US 6,873,931 B1 beschreibt eine Messeinrichtung zur Messung der Winkelausrichtung eines drehbaren oder rotierenden Objektes bezüglich eines Punktes, unter Einsatz eines Beschleunigungssensors, um die Ausrichtung des drehbaren Objektes im Raum zu detektieren.

Der Erfindung liegt die Aufgabe zugrunde, ein THz-Messgerät und THz-Messverfahren zu schaffen, die mit geringem Aufwand sichere Schichtdickenmessungen von Prüfobjekten, insbesondere sphärischen oder zylindrischen Prüfobjekten, ermöglichen.

Diese Aufgabe wird durch ein THz-Messgerät sowie ein Verfahren nach den unabhängigen Ansprüchen gelöst. Die Unteransprüche beschreiben bevorzugte Weiterbildungen. Hierbei ist weiterhin eine Mess-Anordnung aus dem THz-Messgerät und dem zu vermessenden Prüfobjekt vorgesehen.

Das erfindungsgemäße Verfahren kann insbesondere mit einem erfindungsgemäßen THz-Messgerät und/oder bei einer erfindungsgemäßen Mess-Anordnung durchgeführt werden. Das erfindungsgemäße THz-Messgerät kann insbesondere zur Ausführung eines erfindungsgemäßen Verfahrens eingesetzt werden.

Somit ist das THz-Messgerät mit einer Auflagekontur zur Auflage auf der Oberfläche des Prüfobjektes und mit einem Griffbereich ausgebildet. Es ist vorzugsweise tragbar, d.h. das ganze Messgerät ist durch den Benutzer tragbar, wobei es mit seinem Griffbereich z. B. mit einer oder zwei Händen ergriffen und positioniert werden kann. Der Benutzer kann somit das THz-Messgerät ergreifen und durch Anlage an dem Prüfobjekt positionieren. Anders als bei Mess-Systemen mit lediglich tragbarem Messkopf ist hierbei das gesamte THz-Messgerät tragbar, so dass der Benutzer ohne räumliche Beschränkung durch eine Verbindungsschnur oder Lichtwellenleiter zu einem stationären Detektorsystem auch größere Entfernungen zurücklegen kann, z.B. bei Inspektion in einer Lagerhalle.

Das THz-Messgerät ist vorzugsweise mittels eines Energiespeichers energetisch, autark, vorzugsweise ist es batteriebetrieben, d.h. wird durch eine Batterie bzw. Akkumulator mit Energie versorgt. Bei einem vollelektronischen System kann z.B. ein Transceiver-Chip mit einer Spannungsversorgung im Mikrovolt-Bereich eingesetzt werden.

Die Auflagekontur dient zur genauen senkrechten Positionierung, d.h. der senkrechten Positionierung der optischen Achse des THz- Messgerätes zur Oberfläche. Hierbei weist die Anlagekontur genau vier Anlagepunkte auf, die zur Auflage auf der Oberfläche eines definierten Körpers, insbesondere eines zylindrischen Rohres mit definiertem Durchmesser, kommen. Hierzu ist die Anlagekontur mit einem Paar von Konturlinien ausgebildet, die in einer Querrichtung zur optischen Achse zueinander beabstandet sind und bei Anlage an dem zylindrischen - oder auch sphärischen - Körper die vier Anlagepunkte ausbilden.

Die vier Anlagepunkte haben somit insbesondere einen gleichen Abstand zur optischen Achse und sind vorzugsweise symmetrisch zueinander angeordnet, wobei die beiden Konturlinien, an denen jeweils zwei Anlagepunkte ausgebildet sind, parallel oder spiegelsymmetrisch zueinander ausgebildet sein können.

Die Anlagekontur mit ihren Konturlinien kann insbesondere auch eine Anlage an Rohren oder sphärischen Körpern mit unterschiedlichen Durchmessern ermöglichen. So kann eine Anlagekontur mit zwei konkaven, d. h. zur Mitte hin nach hinten verlaufenden Konturlinien, zur Anlage an z. B. einem ersten Rohr mit einem ersten kleineren Durchmesser und einem zweiten Rohr mit einem größeren zweiten Durchmesser dienen, die jeweils Anlagepunkte an definierten unterschiedlichen Stellen der Konturlinien ausbilden.

Somit ist die Konturlinie vorzugsweise nicht sphärisch zur passgenauen Anlage an einer zylindrischen oder sphärischen Oberfläche ausgebildet, sondern derartig, dass nur die definierten vier Anlagepunkte ausgebildet werden. Hierbei wird erfindungsgemäß erkannt, dass insbesondere eine derartige Ausbildung definierter ausschließlicher Anlagepunkte, insbesondere von vier Anlagepunkten, Vorteile gegenüber Auflagekonturen mit komplementärer Ausbildung zur Prüfoberfläche des Prüfobjektes ermöglichen, insbesondere auch die Vermessung von Prüfobjekten mit unterschiedlichen Durchmessern.

Der Benutzer kann somit bei der Produktion z. B. Stichproben an unterschiedlichen Stellen mit geringem Aufwand durchführen. Er kann das THz-Messgerät ergreifen, in einer ersten Messwinkelposition an das rohrförmige oder sphärische Prüfobjekt ansetzen und eine Schichtdickenmessung durchführen, die z. B. direkt an einer Anzeigeeinrichtung des Messgerätes, z. B. als Zahlenwert zur Angabe einer ermittelten Schichtdicke, oder auf einer externen Anzeige - z. B. mit drahtloser Datenübertragung - angezeigt wird. Weiterhin kann z. B. der Messwert verglichen werden und ein Signal ausgegeben werden, ob die ermittelte Schichtdicke ordnungsgemäß oder aber fehlerhaft ist.

Somit wird bereits eine schnelle und sichere Prüfung bei genau senkrechter Ausrichtung zum Prüfobjekt ermöglicht. Derartige Messungen machen daher bewusst nicht von dem Vorteil einer kontaktlosen Messung Gebrauch, die eine THz-Messung gegenüber z. B. einer Ultraschall-Messung ermöglicht; es wird jedoch erkannt, dass ein derartiger Kontakt bei einer manuellen oder händischen Messung mit dem THz-Messgerät schnell und sicher durchführbar ist und das Prüfobjekt auch nicht beschädigt.

Gemäß einer bevorzugten Ausbildung können mehrere Paare von Kontaktlinien, z. B. zwei zueinander um 90° versetzte Paare von Konturlinien ausgebildet werden, so dass eine höhere Anzahl von unterschiedlichen Durchmessern vermessen werden kann. Die Anlagekontur kann z. B. vordere Ecken und von den Ecken zur Mitte hin konkav verlaufende Konturlinien zur Anlage an unterschiedlichen Rohrdurchmessern oder sphärischen Durchmessern aufweisen. Ein Benutzer kann somit das Messgerät in einer ersten Ausrichtung mit dem ersten Paar von Konturlinien, oder um 90° um die optische Achse hierzu geschwenkt mit einem anderen Paar von Konturlinien an die Oberfläche des Prüfobjektes anlegen.

Hierbei können Fehlbedienungen insbesondere bereits weitgehend unterbunden werden, da der Benutzer bei der Anlage merkt, ob eine stabile Position mit genau vier Anlagepunkten eingenommen wird oder das Messgerät zum Kippen oder Verrutschen neigt.

Die Auflagekontur ist vorzugsweise an einem austauschbaren Aufsatz ausgebildet, der starr und in einer definierten Winkelposition anbringbar ist. Somit können unterschiedliche Aufsätze je nach Prüfobjekt aufgesetzt werden, was eine hohe Flexibilität bei geringen Kosten und schnelle Umrüstung ermöglicht. Die Verbindung des Aufsatzes auf dem Messkopf oder auch dem Grundgehäuse kann z. B. eine Bajonettverbindung oder eine andere einrastende Verbindung sein. Der Aufsatz kann insbesondere eine vorzugsweise metallische Formblende sein, die somit auch der Abschirmung von Streustrahlung dient. Somit dient der Aufsatz zum einen der definierten Anlage über die Kontur oder Konturlinien und zum anderen der Abschirmung von Streustrahlung.

Vorzugsweise ist der Aufsatz starr ausgebildet, d.h. nicht flexibel, um die definierte Anlage zu ermöglichen.

Das THz-Messgerät ist insbesondere mit einem länglichen Gehäuse, das auch den Griffbereich ausbildet und vorzugsweise Bedieneinrichtungen wie Schalter, Knöpfe oder dergleichen aufweist, ausgebildet, z. B. bei einer Länge von 25 bis 50 cm. Hierbei sind insbesondere vollelektronische THz-Sende- und Empfangseinheiten hinreichend leicht, so dass das THz-Messgerät tragbar ist und vom Benutzer z. B. mit einer oder beiden Händen manuell bzw. händisch gehandhabt werden kann. Die THz-Strahlung liegt im Frequenzbereich zwischen 0,01 und 10 THz, insbesondere 100 GHz bis 3 THz und wird insbesondere vollelektronisch mittels eines Sende- und Empfangsdipols ausgesandt, insbesondere mit Frequenzmodulation oder mit gepulster Strahlung. Somit sind Laufzeitmessungen direkt im Zeitraum oder entsprechend im Frequenzraum möglich, wobei grundsätzlich auch ein optisches System mit Laufzeitmessung möglich ist.

Insbesondere ein mit Batterie bzw. Akkumulator betriebenes tragbares vollelektronisches THz-Messgerät ist hierbei vorteilhaft, da die vollelektronische Ausbildung mit THz-Transceiver-Chip ohne optische Leistungskomponenten wie einen Laser eine sehr geringe Leistungsaufnahme und somit eine kompakte, tragbare Ausbildung ermöglicht.

Gemäß einer bevorzugten Ausbildung können Messungen in mehreren Messwinkelpositionen bzw. Messpositionen zur umfänglichen, insbesondere auch vollumfänglichen Vermessung des Prüfobjektes durchgeführt werden, indem bei den einzelnen Schichtdicken-Messungen ergänzend die Messwinkelposition des THz-Messgeräts gemessen wird. Bevorzugt wird hierzu ein interner (Längs-) Beschleunigungssensor eingesetzt, der eine Beschleunigung misst, die sich als Komponente der Erdbeschleunigung ausbildet. Bei vertikaler Positionierung des THz-Messgerätes wird somit die volle Gravitationsbeschleunigung als - positive oder negative - Längsbeschleunigung gemessen, bei z. B.

horizontaler Ausrichtung des Längsbeschleunigungssensors somit keine Beschleunigungskomponente; dazwischen ergeben sich Komponenten der Erdbeschleunigung (Gravitationsbeschleunigung) entsprechend dem Cosinus des Verhältnisses des Neigungswinkels zur Vertikalen.

Somit ist mit geringem Aufwand eine genaue Erfassung der Messwinkelposition ermöglicht, wobei gängige Längsbeschleunigungssensoren hinreichende Genauigkeiten der Messung ermöglichen.

Hierbei können z. B. auch zwei Längsbeschleunigungssensoren in zueinander versetzten Richtungen, z. B. auch um 90° oder 45° versetzt, angeordnet werden, um symmetrische Positionen - links und rechts - voneinander zu unterscheiden.

Der Benutzer kann somit eine Messung an mehreren aufeinanderfolgenden Messwinkelpositionen, oder auch bei einer Gleitbewegung um das Prüfobjekt quasi-kontinuierlich als Abfolge aufeinanderfolgender, schneller Messungen durchführen.

Jede Laufzeitmessung ermöglicht hierbei zunächst die Messung des Abstandes der Oberfläche zur Sende- und Empfangseinheit, da die THz-Strahlung beim Auftreffen auf die Oberfläche einen Unterschied des Brechungsindex - bei Kunststoff z. B. einen Brechungsindex von n = 1,5 - erfährt, nachfolgend eine Schichtdickenmessung der vorderen Wandstärke, ggf. bei mehrschichtigen Rohren der mehreren Schichten. Weiterhin kann z. B. ein Innendurchmesser als darauffolgende Luftsäule, und weiterhin auch eine Schichtdicke der hinteren Rohrwand vermessen werden.

Das THz-Messgerät bildet mit dem zu vermessenden Prüfobjekt eine THz-Messanordnung. Diese zeigt eine hohe Effektivität, da die Auflagekontur des Messgerätes an die Außenform, insbesondere zylindrische Außenform des Prüfobjektes, angepasst ist.

Die Erfindung wird im Folgenden anhand der beiliegenden Zeichnungen an einer Ausführungsform näher erläutert. Es zeigen:

Fig. 1     den vorderen Bereich einer tragbaren Terahertz-Messvorrichtung bei abgenommener Formblende;

Fig. 2     die Terahertz-Messvorrichtung bei Anlage an einem ersten Rohr mit definiertem kleineren ersten Durchmesser, in verschiedenen Ansichten;

Fig. 3     eine Fig. 2c) entsprechende Ansicht der Anlage der Messvorrichtung an dem ersten Rohr;

Fig. 4     die Terahertz-Messvorrichtung bei Anlage auf einem zweiten Rohr mit größerem zweiten Durchmesser;

Fig. 5     eine perspektivische Ansicht der Anordnung aus Fig.4;

Fig. 6     eine Anlage der Terahertz-Messvorrichtung an einem dritten Rohr mit großem dritten Durchmesser in gegenüber Fig. 5 um 90° versetzter Stellung;

Fig. 7     eine Seitenansicht der Anordnung aus Fig. 6;

Fig. 8     mehrere Messwinkelpositionen der Terahertz-Messvorrichtung gemäß einer weiteren Ausführungsform zur umfänglichen Vermessung des Rohres;

Fig. 9     Terahertz-Messvorrichtungen mit zwei Beschleunigungssensoren gemäß verschiedener Ausbildungen in den Teilbildern a), b), c);

Fig. 10     die Vermessung eines Prüfobjektes an mehreren Messwinkelpositionen mittels der Terahertz-Messvorrichtung von Fig. 9a;

Fig. 11     die Ausrichtungen und Winkel der Beschleunigungssensoren gemäß Fig. 9 relativ zur optischen Achse.

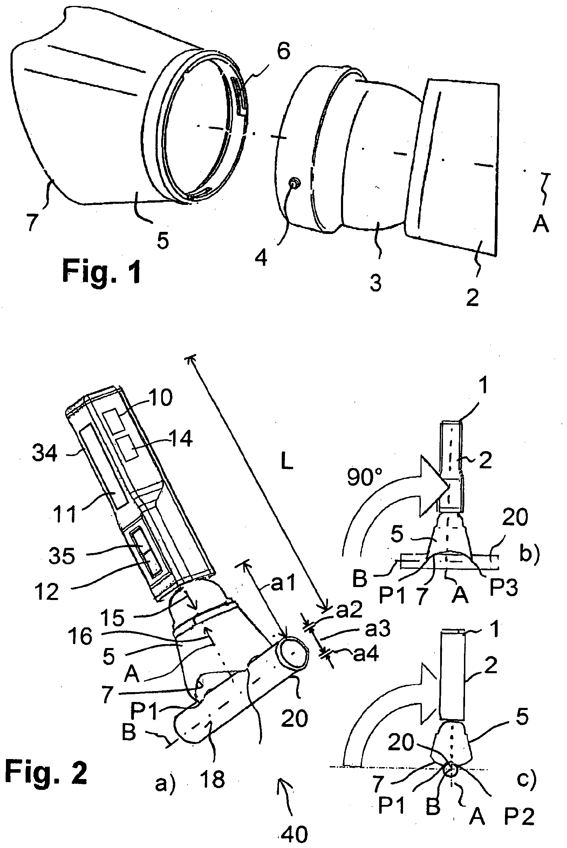

Eine Terahertz-Messvorrichtung 1 gemäß z. B. Fig. 1 und Fig. 2 weist ein Grundgehäuse 2, einen Messkopf 3 mit radial abstehenden Führungsbolzen 4, sowie eine als Aufsatz dienende Formblende 5 auf, die gemäß dieser Ausführungsform Bajonett-Schlitze 6 aufweist, mit denen sie an den Führungsbolzen 4 des Messkopfes 3 befestigt wird. Somit bilden die Führungsbolzen 4 und die Bajonett-Stütze 6 eine Bajonettverbindung, die eine definierte Ausrichtung entlang der optischen Achse A, die auch die Symmetrieachse der Terahertz-Messvorrichtung 1 darstellt, ermöglicht. An ihrem den Bajonett-Schlitze 6 entgegengesetzten Ende weist die Formblende 5 eine Anlagekontur 7 zur Anlage an Prüfobjekten auf, die nachfolgend detaillierter beschrieben wird.

Die Terahertz-Messvorrichtung 1 ist für einen Benutzer tragbar; sie ist z. B. mit einer Länge L von 25 bis 50 cm ausgebildet und weist in dem Grundgehäuse 2 einen Energiespeicher 11, z. B. eine galvanische Zelle (Batterie, Akkumulator), weiterhin eine Steuereinrichtung 10, eine Bedieneinrichtung 35, vorzugsweise eine Anzeigeeinrichtung 12, und weiterhin eine Terahertz-Messelektronik mit einem Terahertz-Sende- und Empfangschip 14 auf, der Terahertz (THz)-Strahlung im Frequenzbereich von 10 GHz bis 10 THz aussendet. Die Terahertz-Messvorrichtung bzw. ihre Terahertz-Messelektronik 14 ist hierbei vorzugsweise vollelektronisch (ohne optische Elemente wie z. B. Femtosekunden-Laser) ausgebildet und daher derartig kompakt dimensionierbar. Der Sende- und Empfangschip 14 sendet somit Terahertz-Strahlung 15 entlang der optischen Achse A aus und detektiert reflektierte Terahertz-Strahlung 16. Hierbei wird die ausgesandte Terahertz-Strahlung insbesondere beim Übergang zwischen Schichten mit unterschiedlichem Brechungs-Index n für die Terahertz-Strahlung 15 teilweise reflektiert. Falls die Grenzflächen, z. B. die Oberfläche 18 eines Prüfobjektes 20, somit lotrecht (senkrecht) zu der entlang der optischen Achse A ausgestrahlten Terahertz-Strahlung 15 positioniert sind, wird die reflektierte Terahertz-Strahlung 16 wiederum entlang der optischen Achse A zurück reflektiert und von dem Sende- und Empfangschip 14 aufgenommen.

Hierbei ermöglicht die Terahertz-Messvorrichtung 1 eine Abstandsmessung von Abständen zu Grenzflächen des Prüfobjektes 20, und nachfolgender, insbesondere durch Überlagerung der ausgesandten Terahertz- Strahlung 15 und der empfangenen Terahertz-Strahlung 16. Hierbei kann insbesondere eine Frequenzmodulation oder gepulste Strahlung vorgesehen sein.

Bei Vermessung eines zylindrischen Kunststoff-Rohres als Prüfobjekt 20 können somit bei einer senkrechten Ausrichtung der optischen Achse A der Terahertz-Messvorrichtung 1 gegenüber der Rohr-Achse B Schichtdicken des Rohres 20 aus dem Messsignal ermittelt werden, d. h. der Abstand a1 der vorderen Oberfläche bzw. der vorderen Seite des Prüfrohres 20 zum Sende- und Empfangschip 14, weiterhin die Schichtdicke a2 der Rohrwand des Rohres 20, nachfolgend der Rohrinnendurchmesser a3 als Dicke der Luftschicht zur gegenüberliegenden Wand, und anschließend die Wandstärke a4 als Dicke der Kunststoffschicht der gegenüberliegenden Wand.

Die genau lotrechte Ausrichtung der optischen Achse A gegenüber der Rohrachse B wird durch die Formblende 5 mit ihrer Anlagekontur 7 sichergestellt. Die Anlagekontur 7 ist derartig ausgebildet, dass sie bei Anlage an der Oberfläche 18 des Prüfobjektes 20 an genau vier Anlagepunkten P, d. h. P1, P2, P3, P4, an der Oberfläche 18 anliegt. Hierzu ist die Anlagekontur 7 zum einen dahingehend symmetrisch ausgebildet, dass sie zwei in Querrichtung - d. h. senkrecht zur optischen Achse A - versetzte, z. B. gekrümmte Konturlinien 7-1 und 7-2 aufweist, die z. B. identisch zueinander oder zueinander gespiegelt sind. Die Anlagepunkte P1, P2, P3, P4 sind somit derartig ausgebildet, dass bei Anlage der Anlagenkontur 7 auf der zylindrischen Oberfläche 18 bei definiertem ersten Durchmesser D1, z. B. 40 mm, eine senkrechte Ausrichtung der optischen Achse A zur Rohrachse B erreicht wird. Hierzu liegen die Anlagepunkte P1, P2, P3, P4 vorzugsweise in einer Ebene senkrecht zu der optischen Achse A. Die Konturlinien 7-1, 7-2 sind somit nicht sphärisch zur großflächigen Anlage, sondern zur definierten Anlage in zwei Anlagepunkten P1, P2 ausgebildet.

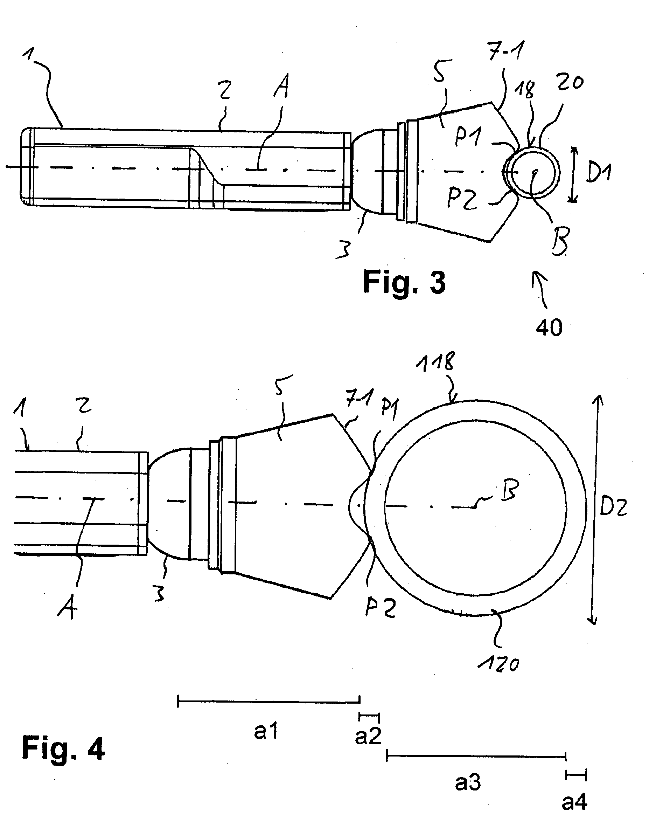

Weiterhin können die Konturlinien 7-1 und 7-2 derartig verlaufen, dass sie unterschiedliche Oberflächenkrümmungen, d.h. unterschiedliche Rohrdurchmesser aufnehmen können, wie die Fig. 3 und 4 zeigen: Gemäß Fig. 3 wird als Prüfobjekt 20 ein Rohr mit kleinem ersten Durchmesser D1 an Anlagepunkten P1 und P2 in einem mittleren Bereich der Konturlinie 7-1 (und zur Zeichenebene versetzt auch entsprechend der Konturlinie 7-2) aufgenommen, gemäß Fig. 4 hingegen als Prüfobjekt 120 ein zweites Rohr mit größerem zweitem Durchmesser D2, z. B. D2= 125 mm, das in Anlagepunkten P1 und P2 an der Konturlinie 7-1 anliegt, die zur Mitte bzw. optischen Achse weiter nach außen versetzt sind. Mit einer geeigneten Konturlinie 7-1 - und der hierzu versetzten identischen bzw. symmetrischen Konturlinie 7-2 - lassen sich somit mehrere Prüfrohre 20, 120 mit unterschiedlichen Durchmessern definiert erfassen bzw. das THz-Messgerät 1 kann jeweils definiert und senkrecht zur Rohrachse D positioniert werden.

Das Grundgehäuse 2 ist mit einem Griffbereich 34 ausgebildet, so dass ein Benutzer die Terahertz-Messvorrichtung 1 - z. B. mit lediglich einer Hand - ergreifen und mit der Formblende 5 nach vorne (in Richtung der optischen Achse A) gegen das Prüfobjekt 20, 120, d. h. gegen die Oberfläche 18, 118 drücken kann. Es stellt sich selbsttätig eine stabile Anlage der Formblende 5 ab den vier Anlagepunkten P1, P2, P3, P4 ein, wobei aufgrund des hinreichenden lateralen Abstandes -zwischen P1, P2 einerseits und P3, P4 andererseits -bei Andrücken mit einer leichten Anlagekraft ein Wackeln sicher verhindert wird und somit eine genauere Positionierung erreicht wird.

Die Formblende 5 kann hierbei aus Metall sein und somit auch vorzugsweise Streustrahlung abfangen, d.h. als Formblende und zur Ausbildung der Kontur dienen.

Somit sind bereits durch die zwei zueinander in Querrichtung beabstandeten Konturlinien 7-1 und 7-2 genaue Messungen von Rohren 20, 120 mit unterschiedlichen Durchmessern D1, D2 möglich.

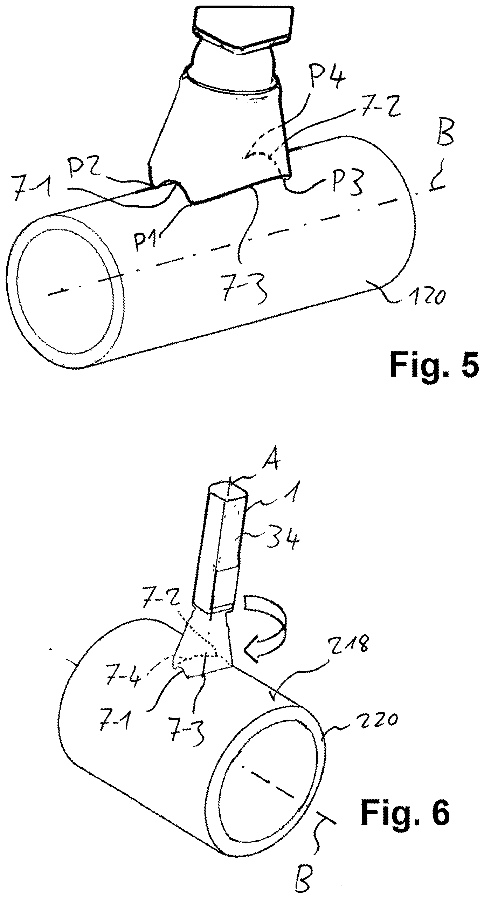

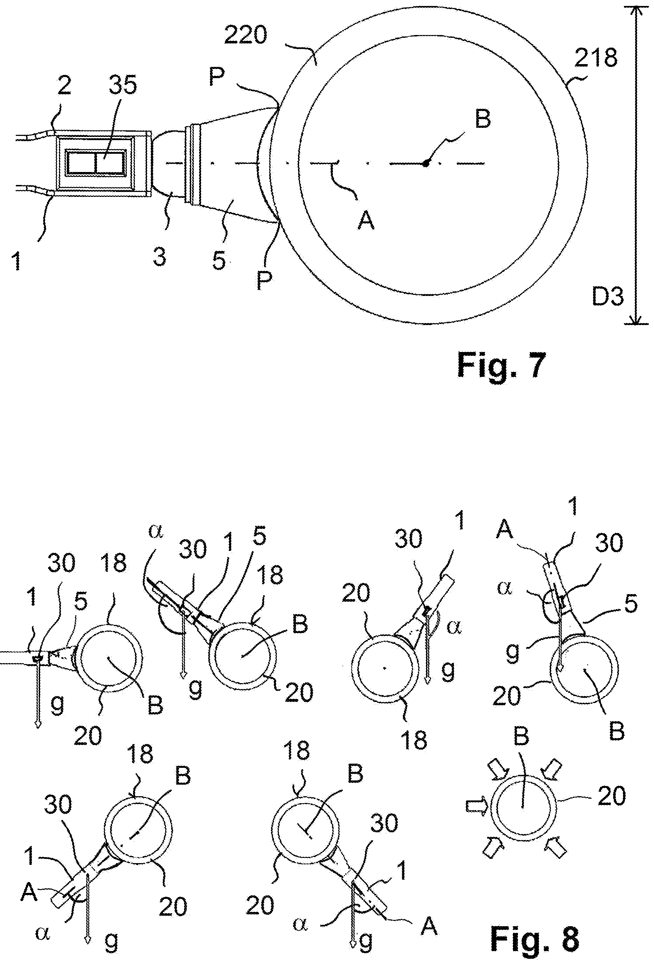

Weiterhin kann mit der gleichen Formblende 5 auch eine Vermessung größerer Rohre erfolgen, z. B. gemäß Fig. 6 und 7 des dritten Rohrs 220 mit Durchmesser D3, z. B. D3= 315 mm. Hierzu wird das THz-Messgerät 1 lediglich um 90° geschwenkt und somit mit den weiteren Konturlinien 7-3 und 7-4 an der Oberfläche 218 des Prüfobjektes 220 angelegt, die entsprechend mit größerer größerer Krümmung ausgelegt ist. Die weiteren Konturlinien 7-1 und 7-2 beeinträchtigen diese Messung nicht, da sich wiederum Anlagepunkte P1, P2, P3, P4 an lediglich den Konturlinien 7-3 und 7-4 ausbilden. Auch mit den Konturlinien 7-3 und 7-4 können hierbei grundsätzlich wiederum Rohre mit mehreren Durchmessern vermessen werden, indem eine geeignete konkave Krümmung der Konturlinien 7-3 und 7-4 ausgebildet wird, die das Erfassen von Rohren mit unterschiedlichen Durchmessern, an unterschiedlichen Anlagepunkten P, ermöglichen.

Grundsätzlich ist auch die Ausbildung einer Formblende 5 mit mehr als zwei Paaren von Konturlinien möglich. Allerdings ist es grundsätzlich vorteilhaft, bei der Vermessung einer größeren Anzahl unterschiedlicher Rohre die Formblende mittels des oben beschriebenen Bajonett-Verschlusses aus Führungsbolzen 4 und Bajonettschlitzen 6 auszutauschen.

Mit dem tragbaren THz-Messgerät 1 ist vorzugsweise auch eine vollumfängliche Vermessung eines Prüfobjektes 20 120, 220 möglich, indem die THz-Messvorrichtung 1 eine Sensorik zur Ermittlung einer Position oder Neigung aufweist:

Gemäß der Ausführungsform der Fig. 8 weist as THz-Messgerät 1 einen Beschleunigungssensor 30 auf, der empfindlich genug ist, die Erdbeschleunigung g bzw. Anteile von g messen. Der Beschleunigungssensor 30 weist eine Sensierrichtung bzw. Längsrichtung auf, die insbesondere die optische Achse A sein kann. Diese Längsrichtung weist in jeder Stellung bzw. Lage eine definierte Messwinkelposition $\alpha$ gegenüber der Vertikalen, d.h. der Richtung der Gravitationsbeschleunigung g, auf. Somit kann die THz-Messvorrichtung 1 sukzessive in mehreren Messwinkelpositionen $\alpha$ entlang des Umfangs des Prüfobjektes 20 positioniert werden. Bei vertikaler Anlage, d.h. an der Oberseite (oberste Position), ist somit $\alpha = 0$, bei Anlage an genau der Unterseite ist somit $\alpha = 180°$ bzw. $\pi$. Bei der in Fig. 8 links oben gezeigten horizontalen Stellung ergibt sich somit $\alpha = 270°$.

Der Beschleunigungssensor 30 misst somit jeweils eine Beschleunigung ac, die sich ergibt aus

$$ac = g * arc \cos \alpha.$$

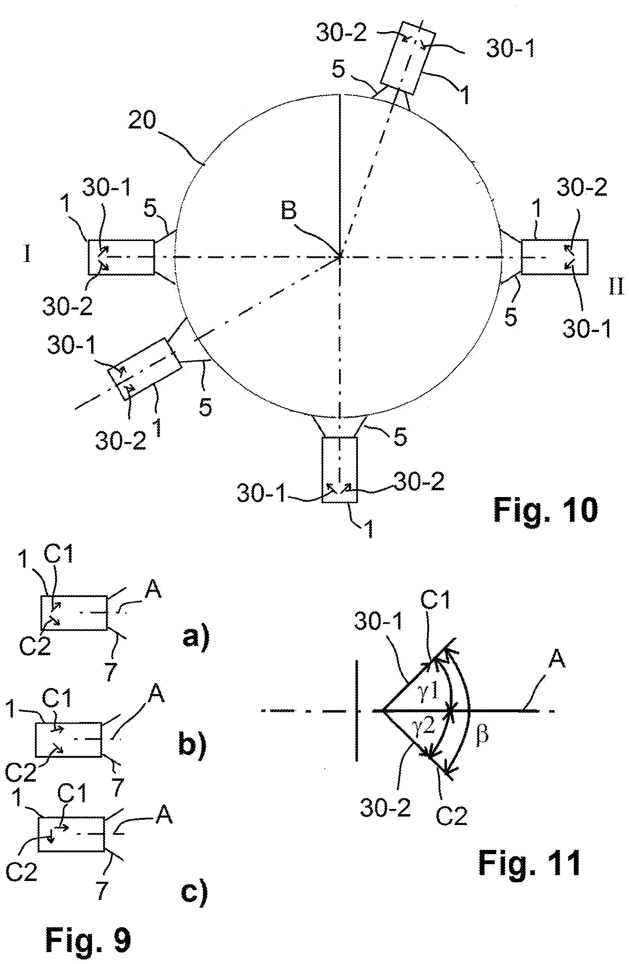

Ergänzend kann z. B. ein zweiter Beschleunigungssensor 30-2 vorgesehen sein, der in einer zu der ersten Sensierrichtung C1 des ersten Beschleunigungssensors 30-1 versetzten, nicht parallelen zweiten Sensierrichtung C2 ausgerichtet ist, so dass auch vom Betrag her gleiche, symmetrische Neigungswinkel (links und rechts) unterschieden werden können. Fig. 9 zeigt in den Teil-Figuren a), b), c) verschiedene derartige Ausbildungen mit zwei Beschleunigungssensoren 30-1, 30-2, deren Sensierrichtungen C1, C2 jeweils zueinander versetzt sind. Gemäß Fig. 9a) sind eine erste Sensierrichtung C1 des ersten Beschleunigungssensors 30-1 und eine zweite Sensierrichtung C2 des zweiten Beschleunigungssensors 30-2 um einen Winkelversatz $\beta$ versetzt, wobei gemäß Fig. 9a) $\beta = 90°$ ist. Fig. 11 zeigt diese Anordnung detaillierter: Die Sensierrichtungen C1 und C2 liegen gemäß dieser Ausführungsform symmetrisch zur optischen Achse A, d. h. der erste Winkelabstand $\gamma1$ der ersten Sensierrichtung C1 zur optischen Achse A ist - vom Betrag her - gleich dem zweiten Winkelabstand $\gamma2$ der zweiten Sensierrichtung C2 zur optischen Achse A; somit sind die Beschleunigungssensoren 30-1 und 30-2 um die optische Achse gekippt bzw. gespiegelt. Besonders bevorzugt sind hierbei Ausbildungen mit $\gamma1$ und $\gamma2 < 90°$, so dass beide Sensierrichtungen C1 und C2 zu dem Prüfobjekt 20 hin zeigen.

Fig. 9b) zeigt eine hierzu alternative Ausbildung, bei der die Sensierrichtungen C1 und C2 ungleiche Winkelabstände $\gamma1$, $\gamma2$ zur optischen Achse A aufweisen, wobei sie vorzugsweise relativ zu der optischen Achse in verschiedene Richtungen versetzt sind. Gemäß der Ausbildung der Fig. 9c) liegt die erste Sensierrichtung C1 in Richtung der optischen Achse A und die zweite Sensierrichtung C2 in einer hierzu nicht-parallelen Richtung, z. B. orthogonal, so dass die Sensierrichtungen C1, C2 den Winkelversatz von $\beta = 90°$ aufspannen.

Vorteilhaft ist somit gemäß der Darstellung der Fig. 10 insbesondere, dass die Sensierrichtungen C1, C2 die Ebene aufspannen, in der auch die optische Achse A liegt. Bei den verschiedenen, in Fig. 10 gezeigten Messungen ergeben sich somit Messwert-Paare der gemessenen Beschleunigungen ac1, ac2 der beiden Beschleunigungssensoren 30-1 und 30-2, die in Kombination eine eindeutige Bestimmung der Messwinkelposition ermöglichen. So sind die beiden in Fig. 10 gezeigten horizontalen Positionen I und II voneinander unterscheidbar, da der erste Beschleunigungssensor 30-1 in der linken Position I eine nach oben weisende, d.h. negative erste Beschleunigung ac1 misst, hingegen in der rechten Position II eine nach unten weisende, d.h. positive erste Beschleunigung ac1, und entsprechend umgekehrt der zweite Beschleunigungssensor 30-2 in der linken Position I eine nach unten weisende, d.h. positive zweite Beschleunigung ac2 und in der rechten Position II eine nach oben weisende, d.h. negative zweite Beschleunigung ac2.

Ein Beispiel hierzu: bei Messung des Neigungswinkels $\alpha$ in den Figuren im Uhrzeigersinn gegenüber der Vertikalen nach unten (Richtung der Gravitationsbeschleunigung g) ergibt sich bei der Ausführungsform der Fig. 9a) mit $\gamma1 = \gamma2 = 45°$ somit vorzugsweise in der linken horizontalen Position I eine erste Beschleunigung ac1 = g * cos(135°) = - g * cos(45°) und eine zweite Beschleunigung ac2 = g * cos(315°) = g * cos(45°). und in der rechten horizontalen Position umgekehrt.

Diese Messungen können auch mit den Terahertz-Messvorrichtungen nach Fig. 9b) und Fig. 9c) durchgeführt werden.

Somit reichen die zwei Beschleunigungssensoren 30-1 und 30-2 in nicht-paralleler Ausrichtung in dieser Ebene, wobei die Beschleunigungssensoren 30-1 und 30-2 jeweils als Messwert einen Betrag und ein Vorzeigen liefern, zur eindeutigen Definition der Messwinkelposition am Prüfobjekt 20.

Somit können Schichtdickenmessungen mit Messungen der Messwinkelposition $\alpha$ kombiniert werden. Für eine Messung gemäß Fig. 8 zur vollumfänglichen Vermessung eines Prüfobjektes 20 werden somit folgende Schritte durchgeführt:

Bereitstellen des THz-Messvorrichtung 1 mit geeigneter Formblende 5 (Schritt St1),

Anlegen der THz-Messgerätes 1mit der Formblende 5 derart, dass zwei zueinander beabstandete Konturlinien 7-1 und 7-2 mit jeweils zwei Anlagepunkten, d.h. P1, P2, P3, P4, definiert zur Anlage kommen. Hierzu drückt ein Benutzer die THz-Messvorrichtung 1 mit ihrer Formblende 5 mit leichter Kraft gegen die Oberfläche 18 des Prüfobjektes 20; dies erfolgt händisch bzw. manuell durch den Benutzer, ohne weitere Hilfsmittel (Schritt St2),

Starten einer Messung, z. B. durch Drücken einer Bedieneinrichtung 35 an dem Grundgehäuse 2, wodurch THz-Strahlung 15 ausgesendet und reflektierte THz-Strahlung 16 gemessen wird, wobei weiterhin die Messwinkelposition $\alpha$ des Beschleunigungssensors 30 aufgenommen und den THz-Messsignalen zugeordnet wird, (Schritt St3)

Auswerten des Messsignals, d. h. der empfangenen THz-Strahlung 16 zur Ermittlung von Laufzeiten und somit Schichtdicken a1, a2, a3, a4 und der Messwinkelposition $\alpha$ (Schritt St4),

Rückkehren zu Schritt St2, unter verstellen der Messwinkelposition $\alpha$ durch Neuansetzen oder Entlanggleiten auf der Oberfläche 18,

bis das Prüfobjekt 20 vollumfänglich vermessen ist.

Bezugszeichenliste

| | |
|---|---|
| 1 | Terahertz-Messvorrichtung |
| 2 | Grundgehäuse |
| 4 | Führungsbolzen |
| 3 | Messkopf |
| 5 | Formblende |
| 6 | Bajonett-Schlitze |
| 7 | Anlagekontur |
| 7-1, 7-2, 7-3, 7-4 | Konturlinien |
| 10 | Steuereinrichtung |
| 11 | Energiespeicher, vorzugsweise Batterie bzw. Akkumulator |
| 12 | Anzeigeeinrichtung |
| 14 | Terahertz-Sende- und Empfangseinrichtung |
| 15 | Terahertz-Strahlung |
| 16 | reflektierte Terahertz-Strahlung |
| 18 | Oberfläche |
| 20 | erstes Prüfobjekt |
| 30 | Beschleunigungssensor |
| 30-1 | erster Beschleunigungssensor |
| 30-2 | zweiter Beschleunigungssensor |
| 34 | Griffbereich |
| 35 | Bedieneinrichtung |
| 40 | THz-Messanordnung |
| 118 | Oberfläche |
| 218 | Oberfläche |
| 120 | zweites Prüfobjekt |
| 220 | drittes Prüfobjekt |
| | |
| ac, | Längsbeschleunigung |
| ac1, ac2 | erste, zweite Längsbeschleunigung |
| g | Gravitationsbeschleunigung |
| | |
| A | optische Achse |
| B | Rohr-Achse |
| C1 | erste Sensierrichtung |
| C2 | zweite Sensierrichtung |
| P, P1, P2, P3, P4 | Auflagepunkte |

a1    Abstand der Oberfläche 18 zur Sende-,Empfangseinrichtung
a2    Schichtdicke der Rohrwand 21
a3    Rohrinnendurchmesser
a4    Wandstärke der gegenüberliegenden Wand
D1    erster Durchmesser
D2    zweiter Durchmesser
D3    dritter Durchmesser
I     linke Position
II    rechte Position
L     Länge

$\alpha$        Messwinkelposition
$\beta$        Winkelversatz
$\gamma 1, \gamma 2$    erster Winkelabstand, zweiter Winkelabstand

**Patentansprüche**

1.  THz-Messgerät (1) zur Ermittlung mindestens einer Schichtdicke (a1, a2, a3, a4) eines Prüfobjektes (20, 120, 220), wobei das Messgerät (1) aufweist:

    eine THz-Sende- und Empfangseinheit (14) zum Aussenden von THz-Strahlung (15) entlang einer optischen Achse (A) und zum Empfangen reflektierter THz-Strahlung (16) entlang der optischen Achse (A),
    eine Steuereinheit (10) zur Ansteuerung der Sende- und Empfangseinheit (14),
    einen Griffbereich (34) zum Ergreifen und Positionieren durch den Benutzer, wobei es an einem vorderen Endbereich (5) eine Auflagekontur (7) mit mehreren Anlagepunkten (P, P1, P2, P3, P4) zur Anlage an einer gekrümmten Oberfläche (18) des Prüfobjektes (20, 120, 220) aufweist, zur senkrechten Positionierung der optischen Achse (A) an der Oberfläche (18, 118, 218), **dadurch gekennzeichnet, dass**
    die Auflagekontur (7) derartig ausgebildet ist, dass bei Anlegen der Auflagekontur (7) an eine zylindrische Oberfläche (18) des Prüfobjektes (20, 120, 220) mit definiertem Durchmesser (D1, D2, D3) genau vier Anlagepunkte (P1, P2, P3, P4) zur Auflage kommen,
    wobei die vier Anlagepunkte (P1, P2, P3, P4) in einer zu der optischen Achse (A) senkrechten Ebene liegen,
    wobei die Anlagekontur (7) für eine zu vermessende Oberfläche (18) zwei zueinander in einer zu der optischen Achse (A) senkrechten Querrichtung beabstandete Konturlinien (7-1, 7-2; 7-3, 7-4) aufweist,
    wobei an jeder Konturlinie (7-1, 7-2; 7-3, 7-4) jeweils für die zu vermessende definierte Oberfläche zwei Anlagepunkte (P1, P2; P3, P4) ausgebildet sind, und wobei die Konturlinien parallel oder spiegelsymmetrisch zueinander ausgebildet sind.

2.  THz-Messgerät (1) nach Anspruch 1,
    **dadurch gekennzeichnet, dass** das THz-Messgerät (1) tragbar ist, z. B. mit einer Länge (L) von 25 cm bis 50 cm.

3.  THz-Messgerät (1) nach Anspruch 1 oder 2,
    **dadurch gekennzeichnet, dass**
    die Auflagekontur (7) an einem austauschbaren, in einer definierten Winkelposition starr befestigbaren Aufsatz (5) ausgebildet ist.

4.  THz-Messgerät (1) nach Anspruch 3,
    **dadurch gekennzeichnet, dass** der Aufsatz (5) eine Formblende (5) aus Metall ist, die für die Abschirmung von Streustrahlung vorgesehen ist, vorzugsweise zur Befestigung an einem Messkopf (3) des THz-Messgerätes (1).

5.  THz-Messgerät (1) nach Anspruch 3 oder 4,
    **dadurch gekennzeichnet, dass** der Aufsatz (5) an seinem hinteren Ende eine Verbindungseinrichtung, z. B. Bajonettschlitze (6) zum definierten Aufsetzen auf Führungsbolzen (4) des Messkopfs (3) oder Grundkörpers (2), aufweist und an seinem vorderen Ende die Auflagekontur (7).

6.  THz-Messgerät (1) nach einem der vorherigen Ansprüche,
    **dadurch gekennzeichnet, dass** mit einem Paar von Konturlinien (7-1, 7-2) jeweils mindestens zwei verschiedene Oberflächen (18, 118) durch Anlage vermessbar sind,

wobei die Anlagepunkte (P1, P2) der verschiedenen Oberflächen (18, 118) an unterschiedlichen Positionen der Konturlinien (7-1, 7-2), insbesondere mit unterschiedlichem Abstand zueinander, ausgebildet sind, wobei die Konturlinien (7-1, 7-2; 7-3, 7-4) im Wesentlichen konkav ausgebildet sind und zu ihrer Mitte hin nach hinten verlaufen.

7. THz-Messgerät (1) nach einem der vorherigen Ansprüche,
**dadurch gekennzeichnet, dass** es zwei Paare von Konturlinien (7-1, 7-2; 7-3, 7-4) aufweist, die an der Anlagekontur (7) in einer Schwenkrichtung (s) um die optische Achse (A), insbesondere um 90° zueinander, versetzt sind, zur Vermessung von zylindrischen oder sphärischen Oberflächen (18, 118, 218) mit unterschiedlichen Durchmessern (D1, D2, D3).

8. THz-Messgerät (1) nach einem der vorherigen Ansprüche,
**dadurch gekennzeichnet, dass** es weiterhin eines oder mehrere Elemente der folgenden Gruppe aufweist:

- einen Energiespeicher (11), insbesondere Batterie oder Akkumulator, zur autarken Stromversorgung der THz-Sende- und Empfangseinrichtung (14) und der Steuereinrichtung (10), vorzugsweise vollständigen autarken Energieversorgung des THz-Messgerätes (1),
- eine Bedieneinrichtung (35), z. B. Schalter, zum Starten einer Schichtdickenmessung,
- einen länglichen Grundkörper (2),
- eine Anzeigeeinrichtung (12).

9. THz-Messgerät (1) nach einem der vorherigen Ansprüche,
**dadurch gekennzeichnet, dass** es eine Winkelpositions- Messeinrichtung (30, 30-1, 30-2) zur Messung einer Messwinkelposition ($\alpha$) bei Anlage an dem Prüfobjekt (20, 120, 220) aufweist, zur vollumfänglichen Vermessung des Prüfobjektes (20, 120, 220) bei Messung in mehreren Messwinkelpositionen ($\alpha$) über den Umfang.

10. THz-Messgerät (1) nach Anspruch 9,
**dadurch gekennzeichnet, dass**
die Winkelpositions-Messeinrichtung mindestens einen Beschleunigungssensor (30, 30-1, 30-2) aufweist zur Messung einer Längsbeschleunigung (ac, ac1, ac2), z. B. entlang der optischen Achse (A), als Komponente der Erdbeschleunigung (g), und
die Steuereinrichtung (10) ausgebildet ist, die Messwinkelposition ($\alpha$) aus dem Verhältnis der gemessenen Längsbeschleunigung (ac) zu der Erdbeschleunigung (g) zu ermitteln, insbesondere unter Berücksichtigung eines Vorzeichens der gemessenen Längsbeschleunigung (ac, ac1, ac2).

11. THz-Messgerät (1) nach Anspruch 10,
**dadurch gekennzeichnet, dass**
die Winkelpositions-Messeinrichtung zwei Beschleunigungssensoren (30-1, 30-2) aufweist, deren Sensierrichtungen (C1, C2) nicht-parallel ausgerichtet sind, z. B. mit einem Winkelversatz ($\beta$) von 45° oder 90° zueinander, zur eindeutigen Ermittlung der Messwinkelposition ($\alpha$) aus den beiden Längsbeschleunigungen (ac1, ac2) der beiden Beschleunigungssensoren (30-1, 30-2).

12. THz-Messgerät (1) nach einem der vorherigen Ansprüche,
**dadurch gekennzeichnet, dass** die Steuereinrichtung (10) ausgebildet ist, Laufzeiten der ausgesandten und reflektierten THz-Strahlung (15, 16), vorzugsweise im Zeitraum oder Frequenzraum, und hieraus mindestens eine Schichtdicke (a1, a2, a3, a4), vorzugsweise eine Vorderwanddicke (a2), Innendurchmesser (a3) und hintere Wanddicke (a4) eines Rohres als Prüfobjekt (20, 120 220) zu ermitteln.

13. THz-Messgerät (1) nach einem der vorherigen Ansprüche,
**dadurch gekennzeichnet, dass** die Terahertz-Sende- und Empfangseinheit (3) Terahertz-Strahlung (15) im Frequenzbereich zwischen 0,01 und 10 THz, insbesondere 100 GHz bis 3 THz, aussendet, insbesondere vollelektronisch mittels eines Dipols, z. B. mit Frequenzmodulation oder gepulst.

14. THz-Messanordnung (40), die ein THz-Messgerät (1) nach einem der vorherigen Ansprüche und das zu vermessende Prüfobjekt (20, 120, 220) aufweist, wobei die Auflagekontur (7) mit den mehreren Anlagepunkten (P, P1, P2, P3, P4) zur Anlage an der gekrümmten Oberfläche (18, 118, 218) des Prüfobjektes (20, 120, 220) und zur senkrechten Positionierung der optischen Achse (A) an der Oberfläche (18, 118, 218) ausgebildet ist.

15. Verfahren zum Vermessen mindestens einer Schichtdicke (a1, a2, a3, a4) eines Prüfobjektes (20, 120, 220) mit einem THz-Messgerät (1), mit mindestens folgenden Schritten:

- Bereitstellen eines tragbaren THz-Messgeräts (1) nach einem der Ansprüche 1 bis13, mit der THz-Sende- und Empfangseinheit (14), einem Grundgehäuse (2) und der an einem vorderen Ende ausgebildeten Anlagekontur (7) (St1),
- Anlegen des THz-Messgeräts (1) mit der Anlagekontur (7) an die Oberfläche (18) des Prüfobjektes (20, 120, 220) durch Andrücken derartig, dass die Anlagekontur (7) mit genau vier Anlagepunkten (P1, P2, P3, P4) an der Oberfläche (18) anliegt und eine optische Achse (A) der Sende- und Empfangseinheit (14) senkrecht auf die Oberfläche (18) ausgerichtet ist, (St2),
- Durchführen mindestens einer Abstandsmessung durch Aussenden von THz-Strahlung (15) auf das Prüfobjekt (20, 120, 220) unter teilweiser Reflexion an mindestens zwei Grenzflächen des Prüfobjektes (20, 120, 220) und Detektieren reflektierter THz-Strahlung (16) (St3),
- Ermitteln mindestens einer Schichtdicke (a2, a3, a4) des Prüfobjektes (20, 120, 220) aus einer Laufzeitmessung der ausgesandten und reflektierten THz-Strahlung (15, 16) (St4).

16. Verfahren nach Anspruch 15,
**dadurch gekennzeichnet, dass** das Prüfobjekt (20, 120, 220) ein Rohr, z. B. Kunststoffrohr ist und die Schritte des Anlegens (St2) und Durchführens der Abstandsmessung (St2) sukzessive in mehreren Messwinkelpositionen ($\alpha$) über den Umfang des Prüfobjektes (20, 120, 220) durchgeführt werden, z. B. in diskreten Schritten oder kontinuierlich,
wobei bei dem Schritt der Durchführens der Abstandsmessung (St2) weiterhin eine Messwinkelposition ($\alpha$) des THz-Messgeräts (1) ermittelt wird, insbesondere durch Messung einer Längsbeschleunigung (ac) als Komponente der Gravitationsbeschleunigung (g).

**Claims**

1. THz measurement device (1) for determining at least one layer thickness (a1, a2, a3, a4) of a test object (20, 120, 220), wherein the measurement device (1) has:

   a THz transceiver unit (14) for emitting THz radiation (15) along an optical axis (A) and for receiving reflected THz radiation (16) along the optical axis (A),
   a control unit (10) for activating the transceiver unit (14),
   a grip region (34) for holding and positioning by the user, wherein it has, in a front end region (5), a contact contour (7) having a plurality of contact points (P, P1, P2, P3, P4) for placement on a curved surface (18) of the test object (20, 120, 220), for perpendicular positioning of the optical axis (A) on the surface (18, 118, 218),
   **characterised in that**,
   the contact contour (7) is designed such that when the contact contour (7) is placed on the cylindrical surface (18) of the test object (20, 120, 220) having a defined diameter (D1, D2, D3), exactly four contact points (P1, P2, P3, P4) come into contact,
   wherein the four contact points (P1, P2, P3, P4) lie in a plane perpendicular to the optical axis (A),
   wherein the contact contour (7) has two contour lines (7-1, 7-2; 7-3, 7-4) spaced apart in a crosswise direction perpendicular to the optical axis (A) for a surface (18) to be measured,
   wherein at each contour line (7-1, 7-2; 7-3, 7-4) respectively two contact points (P1, P2; P3, P4) for the defined surface to be measured are formed,
   and wherein the contour lines are designed in parallel or in mirror symmetry to one another.

2. THz measurement device (1) according to claim 1,
   **characterised in that** the THz measurement device (1) is portable, e.g. having a length (L) of 25 cm to 50 cm.

3. THz measurement device (1) according to claim 1 or 2,
   **characterised in that**
   the contact contour (7) is formed on a replaceable extension (5) that can be rigidly mounted at a defined angular position.

4. THz measurement device (1) according to claim 3,
   **characterised in that** the extension (5) is moulded screen (5) made of metal that is provided for shielding scattered radiation, preferably for attachment to a measuring head (3) of the THz measurement device (1).

EP 3 526 542 B1

**5.** THz measurement device (1) according to claim 3 or 4,
**characterised in that** the extension (5), at its back end, has a connector device, e.g. bayonet slots (6), for defined attachment to guide bolts (4) of the measuring head (3) or a base body (2), and has the contact contour (7) at its front end.

**6.** THz measurement device (1) according to any one of the preceding claims,
**characterised in that** with a pair of contour lines (7-1, 7-2) respectively at least two different surfaces (18, 118) can be measured by contact, wherein the contact points (P1, P2) of the different surfaces (18, 118) are formed at different positions of the contour lines (7-1, 7-2), in particular with a different distance between one another,
wherein the contour lines (7-1, 7-2; 7-3, 7-4) are designed to be substantially concave and to extend backwards towards their centre.

**7.** THz measurement device (1) according to any one of the preceding claims,
**characterised in that** it has two pairs of contour lines (7-1, 7-2; 7-3, 7-4) that are offset against one another, in particular by 90°, at the contact contour (7) in a swivel direction (s) about the optical axis (A) for measuring cylindrical or spherical surfaces (18, 118, 218) having different diameters (D1, D2, D3).

**8.** THz measurement device (1) according to any one of the preceding claims,
**characterised in that** it further has one or a plurality of elements from the following group:

- an energy store (11), in particular a battery or accumulator, for independent supply of electricity for the THz transceiver device (14) and the control device (10), preferably for completely independent supply of energy of the THz measurement device (1),
- an operator control device (35), e.g. a switch, for starting a layer thickness measurement,
- an elongated base body (2),
- a display device (12).

**9.** THz measurement device (1) according to any one of the preceding claims,
**characterised in that** it has an angle position measuring device (30, 30-1, 30-2) for measuring a measuring angle position ($\alpha$) when applied to the test object (20, 120, 220), for measuring the entire circumference of the test object (20, 120, 220) when measuring in a plurality of measuring angle positions ($\alpha$) over the circumference.

**10.** THz measurement device (1) according to claim 9,
**characterised in that** the angle position measuring device has at least one acceleration sensor (30, 30-1, 30-2) for measuring a longitudinal acceleration (ac, ac1, ac2), e.g. along the optical axis (A), as a component of gravitational acceleration (g), and
the control unit (10) is designed to determine the measuring angle position ($\alpha$) from the ratio of the measured longitudinal acceleration (ac) to the gravitational acceleration (g), in particular taking into consideration a sign of the measured longitudinal acceleration (ac, ac1, ac2).

**11.** THz measurement device (1) according to claim 10,
**characterised in that** the angle position measuring device has two acceleration sensors (30-1, 30-2), the sensing devices (C1, C2) of which are aligned non-parallel, e.g. with an angular offset ($\beta$) of 45° or 90° to one another, for unambiguous determination of the measuring angle position ($\alpha$) from the two longitudinal accelerations (ac1, ac2) of the two acceleration sensors (30-1, 30-2).

**12.** THz measurement device (1) according to any one of the preceding claims,
**characterised in that** the control device (10) is designed to determine run-times of the emitted and reflected THz radiation (15, 16), preferably in the period or frequency space and, on the basis of these, at least one layer thickness (a1, a2, a3, a4), preferably a front wall thickness (a2), an interior diameter (a3) and a rear wall thickness (a4) of a tube as test object (20, 120, 220).

**13.** THz measurement device (1) according to any one of the preceding claims,
**characterised in that** the terahertz transceiver unit (3) emits terahertz radiation (15) within the frequency range between 0.01 and 10 THz, in particular 100 GHz to 3 THz, in particular completely electrically by means of a dipole, e.g. with frequency modulations or pulsed.

**14.** THz measurement arrangement (40) that has a THz measurement device (1) according to any one of the preceding claims and the test object (20, 120, 220) to be measured, wherein the contact contour (7) is designed having a plurality of contact points (P, P1, P2, P3, P4) for placement on the curved surface (18, 118, 218) of the test object (20, 120, 220), for perpendicular positioning of the optical axis (A) on the surface (18, 118, 218).

15. Method for measuring at least one layer thickness (a1, a2, a3, a4) of a test object (20, 120, 220) with a THz measurement device (1), having at least the following steps:

- providing a portable THz measurement device (1) according to any one of claims 1 to 13, having the THz transceiver unit (14), a base housing (2) and the contact contour (7) formed on a front end (St1),
- applying the THz measurement device (1) with the contact contour (7) to the surface (18) of the test object (20, 120, 220) by means of pressing in such a way that the contact contour (7) is in contact with the surface (18) at exactly four contact points (P1, P2, P3, P4) and an optical axis (A) of the transceiver unit (14) is aligned perpendicular on the surface (18) (St2),
- carrying out at least one distance measurement by emitting THz radiation (15) towards the test object (20, 120, 220) with partial reflection on at least two boundary surfaces of the test object (20, 120, 220) and detecting reflected THz radiation (16) (St3),
- determining at least one layer thickness (a2, a3, a4) of the test object (20, 120, 220) from a run-time measurement of the emitted and reflected THz radiation (15, 16) (St4).

16. Method according to claim 15, **characterised in that** the test object (20, 120, 220) is a pipe, e.g. A plastic pipe, and the steps of applying (St2) and carrying out the distance measurement (St2) are carried out successively in a plurality of measuring angle positions ($\alpha$) across the circumference of the test object (20, 120, 220), e.g. in discrete steps or continuously, wherein, in the step of carrying out the distance measurement (St2), a measuring angle position ($\alpha$) of the THz measurement device (1) is further determined, in particular by measuring a longitudinal acceleration (ac) as a component of the gravitation acceleration (g).

## Revendications

1. Appareil de mesure térahertz (1) servant à déterminer au moins une épaisseur de couche (a1, a2, a3, a4) d'un objet à tester (20, 120, 220),
   l'appareil de mesure (1) comprenant :

   une unité d'émission et de réception THz (14) servant à émettre un rayonnement THz (15) le long d'un axe optique (A) et à recevoir un rayonnement THz réfléchi (16) le long de l'axe optique (A),
   une unité de commande (10) servant à commander l'unité d'émission et de réception (14),
   une zone de préhension (34) destinée à être saisie et positionnée par l'utilisateur,
   l'appareil de mesure THz comprenant un contour d'appui (7) doté de plusieurs points d'appui (P, P1, P2, P3, P4) qui servent à l'appui sur une surface courbe (18) de l'objet à tester (20, 120, 220), au niveau d'une zone d'extrémité (5) avant, pour un positionnement perpendiculaire de l'axe optique (A) sur la surface (18, 118, 218), **caractérisé en ce que**
   le contour d'appui (7) est conçu de telle sorte qu'à l'appui du contour d'appui (7) sur une surface cylindrique (18) à diamètre défini (D1, D2, D3) de l'objet à tester (20, 120, 220), exactement quatre points d'appui (P1, P2, P3, P4) viennent en appui,
   les quatre points d'appui (P1, P2, P3, P4) se situant sur un plan perpendiculaire,
   le contour d'appui (7) comprenant, pour une surface à mesurer (18), deux lignes de contour (7-1, 7-2, 7-3, 7-4) espacées l'une par rapport à l'autre dans une direction transversale par rapport à l'axe optique (A),
   sur chaque ligne de contour (7-1, 7-2, 7-3, 7-4), deux points d'appui (P1, P2 ; P3, P4) étant conçus respectivement pour la surface à mesurer définie et les lignes de contour étant conçues parallèles ou en symétrie spéculaire l'une par rapport à l'autre.

2. Appareil de mesure térahertz (1) suivant la revendication 1, **caractérisé en ce que** l'appareil de mesure térahertz (1) peut être porté, par exemple avec une longueur (L) de 25 cm à 50 cm.

3. Appareil de mesure térahertz (1) suivant la revendication 1 ou 2, **caractérisé en ce que** le contour d'appui (7) est conçu sur une rehausse (5) échangeable pouvant être fixée de manière rigide dans une position angulaire définie.

**4.** Appareil de mesure térahertz (1) suivant la revendication 3, **caractérisé en ce que** la rehausse (5) est un panneau moulé (5) en métal servant d'écran contre des rayonnements dispersés, réhausse qui est destinée de préférence à être fixée sur une tête de mesure (3) de l'appareil de mesure térahertz (1).

**5.** Appareil de mesure térahertz (1) suivant la revendication 3 ou 4, **caractérisé en ce que** la rehausse (5) comprend à son extrémité arrière un dispositif de raccordement, par exemple des échancrures à baïonnette (6), pour une pose définie sur des boulons de guidage (4) de la tête de mesure (3) ou du corps de base (2) et, à son extrémité avant, le contour d'appui (7).

**6.** Appareil de mesure térahertz (1) suivant une des revendications précédentes **caractérisé en ce qu'**au moins deux surfaces différentes (18, 118) respectivement peuvent être mesurées par appui moyen d'une paire de lignes de contour (7-1, 7-2), les points d'appui (P1, P2) des différentes surfaces (18, 118) étant conçus en différentes positions des lignes de contour (7-1, 7-2), en particulier avec différents écarts l'une par rapport à l'autre, les lignes de contour (7-1, 7-2, 7-3, 7-4) étant conçues sensiblement concaves et de manière qu'elles s'étendent vers l'arrière depuis la zone s'approchant de leur milieu.

**7.** Appareil de mesure térahertz (1) suivant une des revendications précédentes, **caractérisé en ce qu'**il présente deux paires de lignes de contour (7-1, 7-2, 7-3, 7-4), qui sont, sur le contour d'appui (7), décalées dans une direction de pivotement (s) autour de l'axe optique (A), en particulier de 90° l'une par rapport à l'autre pour la mesure de surfaces cylindriques ou sphériques (18, 118, 218) à diamètres différents (D1, D2, D3).

**8.** Appareil de mesure térahertz (1) suivant une des revendications précédentes, **caractérisé en ce qu'**il comprend en plus un ou plusieurs des éléments du groupe suivant :

- une réserve d'énergie (11), en particulier une pile ou un accumulateur pour une alimentation en énergie autonome de l'unité d'émission et de réception THz (14) et de l'unité de commande (10), de préférence pour une alimentation en énergie entièrement autonome de l'appareil de mesure THz (1),
- un dispositif de commande (35), par exemple un commutateur pour le lancement d'une mesure d'épaisseur,
- un corps de base allongé (2),
- un dispositif d'affichage (12).

**9.** Appareil de mesure térahertz (1) suivant une des revendications précédentes, **caractérisé en ce qu'**il comprend un dispositif de mesure de position angulaire (30, 30-1, 30-2) pour la mesure d'une position angulaire ($\alpha$) lors de l'appui sur un objet à tester (20, 120, 220) afin de réaliser une mesure intégrale de l'objet à tester (20, 120, 220) au moyen de mesures en plusieurs positions angulaires de mesure ($\alpha$) sur le pourtour.

**10.** Appareil de mesure térahertz (1) suivant la revendication 9, **caractérisé en ce que** le dispositif de mesure de position angulaire comprend au moins un capteur d'accélération (30, 30-1, 30-2) pour la mesure d'une accélération longitudinale (ac, ac1, ac2), par exemple le long de l'axe optique (A), comme composante de l'accélération gravitationnelle (g), et **en ce que** l'unité de commande (10) est conçue pour déterminer la position angulaire de mesure ($\alpha$) à partir du rapport entre l'accélération longitudinale mesurée (ac) et l'accélération gravitationnelle (g), en particulier en tenant compte d'un signe précurseur de l'accélération longitudinale mesurée (ac, ac1, ac2).

**11.** Appareil de mesure térahertz (1) suivant la revendication 10, **caractérisé en ce que** le dispositif de mesure de position angulaire comprend deux capteurs d'accélération (30-1, 30-2), dont les directions de capture (C1, C2) ne sont pas orientées parallèlement, par exemple avec un décalage angulaire ($\beta$) de 45° ou 90° l'une par rapport à l'autre, pour une détermination claire de la position angulaire de mesure ($\alpha$) à partir des deux accélérations longitudinales (ac1, ac2) des deux capteurs d'accélération (30-1, 30-2).

**12.** Appareil de mesure térahertz (1) suivant une des revendications précédentes, **caractérisé en ce que** l'unité de commande (10) est conçue pour déterminer des durées de rayonnement THz émis et réfléchi (15, 16), de préférence dans l'espace temporel et fréquentiel, et à partir de cela, au moins une épaisseur de couche (a1, a2, a3, a4), de préférence une épaisseur de paroi avant (a2), un diamètre interne (a3) et une épaisseur de paroi arrière (a4) d'un tuyau comme objet à tester.

**13.** Appareil de mesure térahertz (1) suivant une des revendications précédentes, **caractérisé en ce que** l'unité d'émission et de réception THz (3) émet un rayonnement térahertz (15) dans une plage de fréquences entre 0,01 et 10 THz, en particulier de 100 GHz à 3 THz, en particulier de manière entièrement électronique au moyen d'un dipôle, par exemple avec modulation de fréquence ou de manière puisée.

14. Système de mesure térahertz (40) comprenant un appareil de mesure THz (1) suivant une des revendications précédentes et l'objet à tester (20, 120, 220), le contour d'appui (7) avec les plusieurs points d'appui (P, P1, P2, P3, P4) servant à l'appui sur la surface courbe (18, 118, 218) de l'objet à tester (20, 120, 220) et au positionnement perpendiculaire de l'axe optique (A) sur la surface (18, 118, 218).

15. Procédé de mesure d'au moins une épaisseur de couche (a1, a2, a3, a4) d'un objet à tester (20, 120, 220) au moyen d'un appareil de mesure THz (1), le procédé comprenant au moins les étapes suivantes :

- la fourniture d'un appareil de mesure THz (1) portable suivant une des revendications 1 à 3 avec l'unité d'émission et de réception THz (14), un boîtier de base (2) et le contour d'appui (7) conçu à une extrémité avant (St1),
- la mise en appui de l'appareil de mesure THz (1) avec le contour d'appui (7) sur la surface (18) de l'objet à tester (20, 120, 220) en appuyant de telle sorte que le contour d'appui (7) est appliqué avec exactement quatre points d'appui (P1, P2, P3, P4) sur la surface (18) et qu'un axe optique (A) de l'unité d'émission et de réception (14) est dirigé perpendiculairement sur la surface (18) (St2),
- la réalisation d'au moins une mesure de distance par émission d'un rayonnement THz (15) vers l'objet à tester (20, 120, 220) avec une réflexion partielle sur deux surfaces limites de l'objet à tester et la détection d'un rayonnement THz (16) réfléchi (St3),
- la détermination d'au moins une épaisseur de couche (a2, a3, a4) de l'objet à tester (20, 120, 220) à partir d'une mesure de la durée de rayonnement THz émis et réfléchi (15, 16) (St4).

16. Procédé suivant la revendication 15, **caractérisé en ce que** l'objet à tester (20, 120, 220) est un tuyau, par exemple un tuyau en matière artificielle et **en ce que** les étapes de l'appui (St2) et de l'exécution de la mesure de distance (St2) sont réalisées successivement en plusieurs positions angulaires de mesure (α) sur le pourtour de l'objet à tester (20, 120, 220), par exemple par pas discrets ou de manière continue, lors de l'exécution de la mesure de distance (St2) une position angulaire de mesure (α) de l'appareil de mesure térahertz (1) étant déterminée en plus, en particulier au moyen d'une mesure de l'accélération longitudinale (ac) comme composante de l'accélération gravitationnelle (g).

**Fig. 1**

**Fig. 2**

**Fig. 3**

**Fig. 4**

**Fig. 5**

**Fig. 6**

**Fig. 7**

**Fig. 8**

**Fig. 10**

**Fig. 9**

**Fig. 11**

**IN DER BESCHREIBUNG AUFGEFÜHRTE DOKUMENTE**

**In der Beschreibung aufgeführte Patentdokumente**

- US 6873931 B1

**In der Beschreibung aufgeführte Nicht-Patentliteratur**

- **E. PICKWELL-MACPHERSON.** Terahertz pulsed Imaging in vivo. *Proc. of SPIE,* 2011, vol. 7897